# EUROPÄISCHE PATENTSCHRIFT

(11) **EP 3 275 739 B1**
(45) Veröffentlichungstag und Bekanntmachung des Hinweises auf die Patenterteilung: **15.01.2020**
(21) Anmeldenummer: 17181629.1
(22) Anmeldetag: 17.07.2017
(51) Int. Cl.: B60R 22/18, B60R 21/13

(54) **KRAFTFAHRZEUG MIT EINER STÜTZE MIT ZUMINDEST EINER SICHERHEITSGURT-MONTAGEVORRICHTUNG**
VEHICLE WITH ASUPPORT WITH AT LEAST ONE SAFETY BELT MOUNTING DEVICE
VEHICULE AVEC UN SUPPORT COMPRENANT AU MOINS UN DISPOSITIF DE MONTAGE DE CEINTURE DE SÉCURITÉ

(30) Priorität: 28.07.2016 DE 102016009145
(43) Veröffentlichungstag der Anmeldung: 31.01.2018
(73) Patentinhaber: MAN Truck & Bus SE, 80995 München (DE)
(72) Erfinder: Rohrmüller, Hans, 82216 Maisach (DE); Schönegger-Fösleitner, Erich, 8933 St. Gallen (AT); Schropp, Sven, 86567 Hilgertshausen-Tandern (DE); Siflinger, Markus, 85604 Zorneding (DE)
(74) Vertreter: v. Bezold & Partner Patentanwälte - PartG mbB

(56) Entgegenhaltungen:
- EP-A1- 0 635 405
- WO-A1-84/00132
- DE-A1- 2 166 310
- DE-A1- 3 614 307
- JP-A- H03 246 172
- JP-A- H11 165 659
- US-A- 2 740 642
- US-A- 2 891 804
- US-A- 3 885 810

## Beschreibung

Die Erfindung betrifft eine Stütze mit zumindest einer Sicherheitsgurt-Montagevorrichtung zur Montage eines Sicherheitsgurts zum Sichern einer auf einem Kraftfahrzeug-Sitz sitzenden Person, wobei die Stütze zweckmäßig zur Anordnung in einem Innenraum eines Kraftfahrzeugs (z. B. Nutzfahrzeug oder Wohnmobil) vorgesehen ist und vorzugsweise zur Absicherung des Überlebensraums im Crash-Fall ausgelegt ist.

Zum Stand der Technik kann zunächst auf die US 2 740 642 A1 verwiesen werden, die ein Kraftfahrzeug mit Stützen aufweist, wobei zwischen den Stützen und einem Dach Kunststoffpads angeordnet sind. Ferner kann zum Stand der Technik auf die JP H 03 246172 A, die EP 0 635 405 A1 und die DE 21 66 310 A1 verwiesen werden. Aus der EP0 635 405 A1 ist ein Kraftfahrzeug nach dem Oberbegriff des Anspruchs 1 bekannt.

Hohe Sicherheitsanforderungen in modernen Kraftfahrzeugen bedingen, fallweise auch durch Gesetzesvorgaben gestützt, eine weitestgehende Ausrüstung aller Sitze mit 3-Punkt-Sicherheitsgurten, sowie eine Verbesserung der Fahrgastzellenstabilität im Crashfall- z.B. ECE-R29/3 für LKW-Fahrerhäuser. Derzeit werden solche freistehenden Sitze sehr oft nur mit Beckengurten ausgerüstet.

Eine aus der Praxis bekannte Lösung für die Ausrüstung eines freistehenden Sitzes mit einem 3-Punkt-Sicherheitsgurt ist die Verwendung eines sitzintegrierten Gurtes. Diese Lösung erfordert meist aufwändige kosten- und gewichtsintensive Verstärkungen in der Sitzstruktur und in der karosserieseitigen Anbindungsbasis für den Sitz. Da solche Sitze - z.B. Mittelsitz in einer verlängerten Kabinenvariante - meist ohne Schwingsystem ausgeführt sind, ist aus Fahrkomfortgründen ein sitzintegriertes Gurtsystem nicht erforderlich. Die in vielen Fällen exponierte Position eines solchen Sitzes - in der Mitte eines Fahrerhauses und eventuell auch gegenüber Fahrer- und Beifahrersitz erhöht - erfordert dann auch eine zusätzliche Verstärkung der Dachstruktur, um bei einem Unfall, z.B. Überschlag, den Passagier besser gegen die Deformation der Fahrgastzellenstruktur zu schützen, wobei diese Verstärkungsmaßnahmen, aufgrund der durch die räumliche Anordnung bedingten ungünstigen Kraftverläufe, entsprechend massiv ausgeführt werden müssen. In vielen Fällen erfolgt die Ausrüstung des betreffenden Fahrzeuges nicht generell mit Mittelsitzen, sondern nur auf Kundenwunsch, sodass die Verstärkungsmaßnahmen in der Dachstruktur und an der Sitzanbindungsbasis entweder die Herstellkosten der gesamten Baureihe erhöhen oder in der Produktion eine aufwändige Varianz erzeugen.

Vor allem bei PKW-Anwendungen - vorzugsweise sogenannten SUV - sind auch Konzepte aus der Praxis bekannt, bei denen für den hinteren Mittelsitz der Gurtretraktor im Dach positioniert ist. Der Sicherheitsgurt (Gurtband) hat in diesem Fall zwei Zungen, die beim Anlegen des Sicherheitsgurtes in zwei Schlösser links und rechts vom Becken eingerastet werden. Dieses Konzept ist für freistehende Sitze im Nutzfahrzeugbereich nur bedingt tauglich, da aufgrund der im Vergleich zur Sitzposition meist höheren Dachinnenkontur der Sicherheitsgurt für den Nutzer wesentlich schwerer zu erreichen wäre. Auch bei diesem Konzept ist für den Crashfall eine zusätzliche Verstärkung im Dach erforderlich, was für kundenspezifische Anwendungsfälle die Produktvarianz erhöht bzw. das Grundfahrzeug verteuert.

Eine Aufgabe der Erfindung ist es, ein alternatives und/oder verbessertes Sicherheitskonzept für einen Kraftfahrzeug-Innenraum zu schaffen.

Diese Aufgabe kann mit den Merkmalen der unabhängigen Ansprüche gelöst werden. Vorteilhafte Weiterbildungen der Erfindung können den Unteransprüchen und der folgenden Beschreibung bevorzugter Ausführungsformen der Erfindung entnommen werden.

Die Erfindung betrifft ein Kraftfahrzeug, z. B. ein Nutzfahrzeug, insbesondere einen Lastkraftwagen, oder ein Wohnmobil, mit einem Innenraum, der zweckmäßig durch eine Bodenstruktur, eine Dachstruktur und zwei Seitenstrukturen begrenzt ist. Zusätzlich kann der Innenraum noch z. B. eine Vorderwand und eine Rückwand aufweisen.

Im Innenraum ist eine Stütze angeordnet, vorzugsweise eine freistehende, insbesondere vertikale oder im Wesentlichen vertikale Stütze und/oder eine beabstandet zwischen den zwei Seitenstrukturen positionierte Stütze.

Die Stütze zeichnet sich insbesondere dadurch aus, dass sie zumindest eine Sicherheitsgurt-Montagevorrichtung zur Montage eines Sicherheitsgurts zum Sichern, insbesondere Rückhalten, einer auf einem Kraftfahrzeug-Sitz sitzenden Person aufweist.

Die Stütze zeichnet sich vorzugsweise zusätzlich dadurch aus, dass sie zur Verhinderung oder zumindest Reduzierung einer Dachdeformation (z. B. Dachintrusion) im Crashfall des Kraftfahrzeugs ausgelegt ist, um im Crashfall einen Überlebensraum im Innenraum zu gewährleisten.

Damit kann einer oder mehrere der folgenden Vorteile erzielt werden: Ausstattung von insbesondere freistehenden Sitzen in Kraftfahrzeugen mit ergonomisch optimal angeordneten und gut erreichbaren, fahrerhausfesten 3-Punkt-Haltegurt-Systemen; und/oder die Stütze eignet sich für alle üblichen Gurtkonzepte; und/oder weitgehende und gesetzeskonforme Absicherung des Überlebensraums (für die betreffende Person) im Crashfall des Kraftfahrzeugs; und/oder Adaption der Sicherheitsgurt-Anbindungsmaßnahmen und der entsprechenden Absicherung des Überlebensraums anwendungsbezogen und ohne wesentliche Kostenbelastung einer gesamte Baureihe im Fall kundenspezifischer Anwendungsfälle.

Es ist möglich, dass die Stütze nur eine obere Sicherheitsgurt-Montagevorrichtung aufweist oder aber die Stütze eine obere Sicherheitsgurt-Montagevorrichtung und eine untere Sicherheitsgurt-Montagevorrichtung aufweist.

Der Sicherheitsgurt kann z. B. als Teil eines 3-Punkt-Haltegurt-Systems ausgeführt sein, so dass zweckmäßig die Stütze also mit einem sogenannten 3-Punkt-Haltegurt-System ausgestattet sein kann. Hierbei ist z. B. auch eine sogenannte Zwei-Zungen-Variante mit zwei separaten Schlössern möglich.

Die Stütze ist mit zumindest einer Einrichtung zur Kompensation von im Fahrzustand des Kraftfahrzeugs entstehenden Verformungen versehen. Die Verformungen können z. B. Verwindungen, Verdrehungen und/oder andere Deformationen umfassen, zweckmäßig zwischen der Bodenstruktur und der Dachstruktur.

Die Einrichtung stellt zumindest einen Bewegungsfreiheitsgrad für die Stütze im Wesentlichen in Längsrichtung der Stütze zur Verfügung. Die Einrichtung umfasst eine Führungsbuchse, in der die Stütze zweckmäßig abschnittsweise längsverschieblich gelagert sein kann.

Die Stütze kann z. B. über eine obere Befestigungseinrichtung an einem oberen Kraftfahrzeug-Bauteil (z. B. die Dachstruktur) montiert sein und/oder über eine untere Befestigungseinrichtung an einem unteren Kraftfahrzeug- Bauteil (z. B. die Bodenstruktur oder ein Sitzsockel) montiert sein.

Es ist möglich, dass die Einrichtung Teil der oberen Befestigungseinrichtung und/oder Teil der unteren Befestigungseinrichtung ist. Es sind im Rahmen der Erfindung sogar Ausführungsformen möglich, in denen die Einrichtung zwischen der oberen Befestigungseinrichtung und der unteren Befestigungseinrichtung vorgesehen ist.

Es ist möglich, dass die Einrichtung ein geräuschhemmendes Element umfasst, vorzugsweise angeordnet zwischen der Führungsbuchse und der Stütze, ausgeführt als Ummantelung für die Stütze und/oder hergestellt aus Kunststoff. Die Führungsbuchse kann zweckmäßig an der Dachstruktur fixiert sein.

Es ist möglich, dass das obere Kraftfahrzeug-Bauteil die Dachstruktur umfasst und die obere Befestigungseinrichtung an die Dachstruktur montiert ist, z. B. im Wesentlichen starr.

Es ist ebenfalls möglich, dass das untere Kraftfahrzeug-Bauteil einen vorzugsweise auf die Bodenstruktur aufsetzbaren und/oder daran z. B. lösbar anmontierbaren Sitzsockel umfasst und die untere Befestigungseinrichtung an den Sitzsockel montiert ist. Alternativ oder ergänzend kann das untere Kraftfahrzeug-Bauteil allerdings auch die Bodenstruktur umfassen und die untere Befestigungseinrichtung kann an die Bodenstruktur (z. B. eine Bodenerhöhung) montiert sein, z. B. im Wesentlichen starr.

Der Kraftfahrzeug-Sitz kann ein mittlerer und/oder freistehender Sitz sein, wobei alternativ oder ergänzend die Stütze seitlich neben und/oder hinter der Sitzlehne des Kraftfahrzeug-Sitzes angeordnet sein kann.

Es ist möglich, dass der Kraftfahrzeug-Sitz z. B. auf einer zweckmäßig podestförmigen Bodenerhöhung angeordnet ist und/oder die Sitzfläche des Kraftfahrzeug-Sitzes sich auf einem höheren Niveau erstreckt als die Sitzfläche zumindest eines seitlich benachbarten Kraftfahrzeugsitzes, eines Fahrersitzes und/oder eines Beifahrersitzes des Kraftfahrzeugs.

Der Kraftfahrzeug-Sitz kann, wie schon zuvor erwähnt, ein mittlerer oder freistehender Sitz sein, wobei damit insbesondere ein Sitz in einer Sitzreihe zwischen zwei äußeren Sitzen umfasst ist (z. B. zwischen einem äußersten linken Sitz und einem äußersten rechten Sitz der Sitzreihe).

Der Kraftfahrzeug-Sitz kann z. B. ein starrer oder einstellbarer Sitz sein.

Der Kraftfahrzeug-Sitz ist vorzugsweise ohne Schwingenfunktion ausgeführt.

Die Stütze kann im Wesentlichen über ihre gesamte Längserstreckung im Wesentlichen linear ausgeführt sein. Alternativ kann die Längserstreckung der Stütze einen oder mehrere Richtungswechsel aufweisen.

Die Stütze kann in unterschiedlichen Querschnitten ausgeführt sein. Es können verschiedene zweckdienliche Materialien zum Einsatz kommen.

Die obere Befestigungseinrichtung und/oder die untere Befestigungseinrichtung kann z. B. als Schraubverbindung ausgeführt sein und zum Toleranzausgleich z. B. ein Langloch umfassen.

Es ist möglich, die Stütze als Träger für diverse Zusatzausrüstungen und/oder - anwendungen zu nutzen.

Das obere Kraftfahrzeug-Bauteil und/oder die Dachstruktur können z. B. ein Dachpaneel oder eine Dachplatte (z. B. Dachinnenblech) umfassen, aber auch z. B. ein Element einer rahmenförmigen Tragstruktur.

Das untere Kraftfahrzeug-Bauteil und/oder die Bodenstruktur können z. B. ein Bodenpaneel oder eine Bodenplatte (z. B. Bodeninnenblech) umfassen, aber auch z. B. ein Element einer rahmenförmigen Tragstruktur.

Es ist möglich, dass die Sicherheitsgurt-Montagevorrichtung, insbesondere die obere Sicherheitsgurt-Montagevorrichtung so ausgeführt ist, um an der Stütze längsverschieblich montierbar zu sein. Dadurch kann zweckmäßig der Verlauf des Sicherheitsgurts an z. B. unterschiedlich große Personen angepasst werden.

Der Innenraum kann vorzugsweise Teil eines Kraftfahrzeugs mit einer vordersten Sitzreihe mit zumindest drei Sitzplätzen sein, insbesondere Teil einer Doppelkabine.

Der Kraftfahrzeug-Sitz kann vorzugsweise in der vordersten Sitzreihe des Kraftfahrzeugs, die zumindest zwei oder zumindest drei Sitze umfassen kann, positioniert sein.

Vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren. Bezugnahmen auf "Ausführungsbeispiel (e)" in der gesamten Beschreibung, die nicht im Umfang der beigefügten Ansprüche liegen, stellen lediglich mögliche beispielhafte Ausführungen dar und sind daher nicht Teil der vorliegenden Erfindung.
- Figur 1: zeigt eine Frontansicht einer Stütze gemäß einer Ausführungsform der Erfindung in einem Innenraum eines Kraftfahrzeugs,
- Figur 2: zeigt eine Seitenansicht der in Figur 1 gezeigten Ausführungsform,
- Figur 3: zeigt eine Schnittansicht einer Einrichtung zur Kompensation von im Fahrzustand des Kraftfahrzeugs entstehenden Verformungen für die z. B. in den Figuren 1 und gezeigte Stütze, und
- Figur 4: zeigt eine perspektivische Ansicht mit Weglassungen zu Darstellungszwecken einer Stütze gemäß einer Ausführungsform der Erfindung in einem Innenraum eines Kraftfahrzeugs.

Die unter Bezugnahme auf die Figuren beschriebenen Ausführungsformen stimmen teilweise überein, sodass ähnliche oder identische Teile mit den gleichen Bezugszeichen versehen sind und zu deren Erläuterung auch auf die Beschreibung der anderen Ausführungsformen verwiesen wird, um Wiederholungen zu vermeiden.

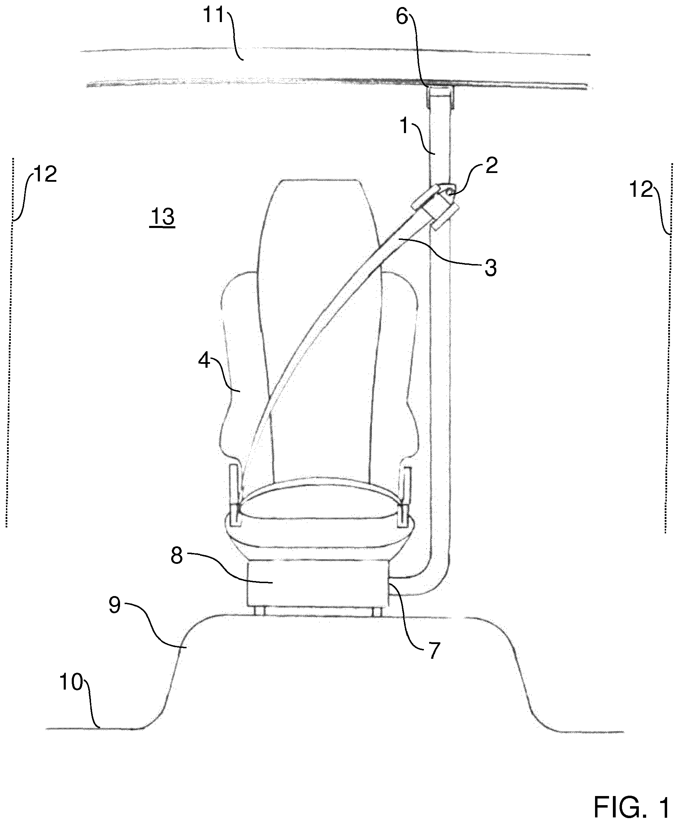

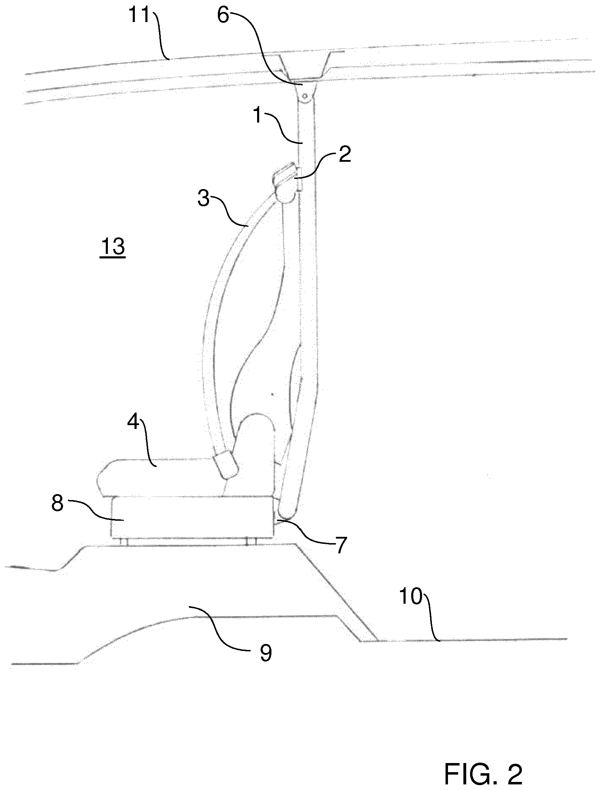

Figur 1 zeigt eine Frontansicht einer Stütze 1 gemäß einer Ausführungsform der Erfindung in einem Innenraum 13 eines Kraftfahrzeugs, während Figur 2 eine zugehörige Seitenansicht zeigt.

Unter Bezugnahme auf die Figuren 1 und 2 wird der Innenraum 13 durch eine Bodenstruktur 10, eine Dachstruktur 11 und zwei in Figur 1 nur schematisch und prinzipiell angedeutete Seitenstrukturen 12 begrenzt. Im Innenraum 13 ist ein Kraftfahrzeug-Sitz 4 angeordnet.

Die Stütze 1 umfasst eine zweckmäßig obere Sicherheitsgurt-Montagevorrichtung 2 zur Montage eines Sicherheitsgurts 3 zum Sichern einer auf dem Kraftfahrzeug-Sitz 4 sitzenden Person und ist zusätzlich zweckmäßig so ausgelegt, dass sie eine Dachdeformation, insbesondere Dachintrusion im Crashfall (z. B. Überschlag) des Kraftfahrzeugs verhindert oder zumindest reduziert, um einen Überlebensraum im Immenraum 13 zu gewährleisten. Der Sicherheitsgurt 3 ist Teil eines 3-Punkt-Haltegurt-Systems. Die Stütze 1 erstreckt sich zweckmäßig abschnittsweise seitlich neben und hinter dem Kraftfahrzeug-Sitz 4, insbesondere hinter der Sitzlehne des Kraftfahrzeug-Sitzes 4, und kann z. B. als Rundrohr-Stahlstütze ausgeführt sein.

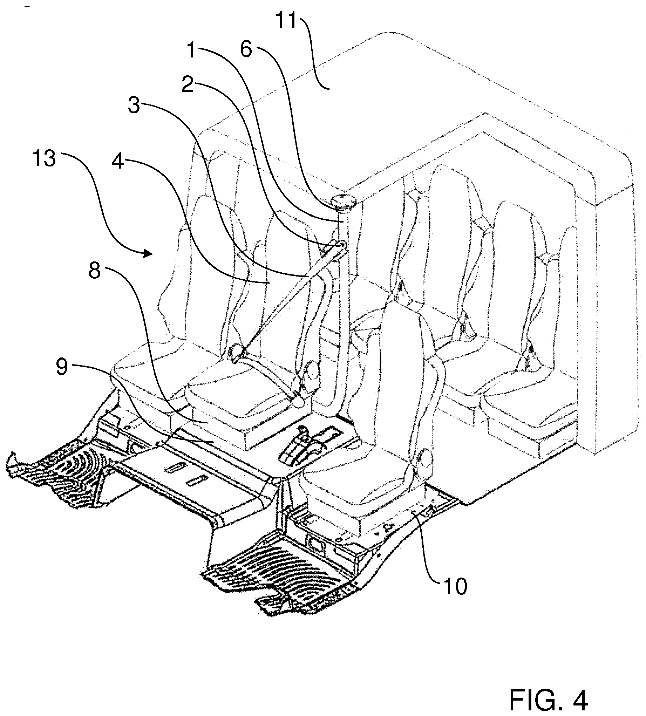

Der Kraftfahrzeug-Sitz 4 umfasst einen Sitzsockel 8, der auf einer vorzugsweise podestförmigen Bodenerhöhung 9 der Bodenstruktur 10 aufgesetzt und daran z. B. lösbar anmontiert ist. Der Kraftfahrzeug-Sitz 4 ist vorzugsweise ein mittlerer und/oder freistehender Sitz. Die Sitzfläche des Kraftfahrzeug-Sitzes 4 erstreckt sich zweckmäßig auf einem höheren Niveau als die Sitzfläche eines seitlich benachbarten Kraftfahrzeug-Sitzes, eines Fahrersitzes und/oder eines Beifahrersitzes des Kraftfahrzeugs (siehe z. B. Figur 4).

Die Stütze 1 ist über eine obere Befestigungseinrichtung (z. B. eine im Wesentlichen starre Schraubverbindung) 6 an ein oberes Kraftfahrzeug-Bauteil, nämlich die Dachstruktur 11, montiert und über eine untere Befestigungseinrichtung (z. B. eine im Wesentlichen starre Schraubverbindung) 7 an einem unteren Kraftfahrzeug-Bauteil, nämlich den Sitzsockel 8, montiert. Es sind im Rahmen der Erfindung allerdings auch Ausführungsformen möglich, bei denen die untere Befestigungseinrichtung 7 an die Bodenstruktur 10, z. B. die Bodenerhöhung 9, montiert ist. Ebenfalls sind Montagen an z. B. Elemente von oberen und/oder unteren Rahmenkonstruktionen möglich.

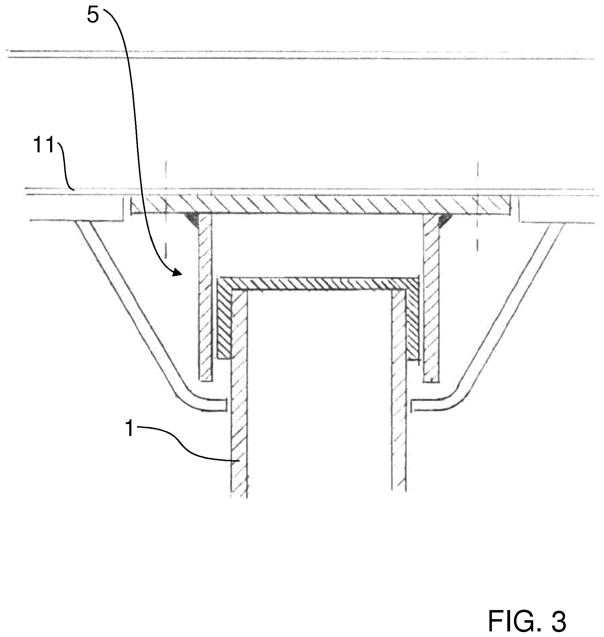

Figur 3 zeigt eine Querschnittsansicht einer Einrichtung 5 zur Kompensation von im Fahrzustand des Kraftfahrzeugs entstehender Verformungen, z. B. Verwindungen zwischen der Bodenstruktur 10 und der Dachstruktur 11, mittels der die z. B. in den Figuren 1 und 2 gezeigte Stütze 1 entsprechend der Erfindung nach Anspruch 1 ausgestattet werden kann.

Die Einrichtung 5 ist vorzugsweise Teil der oberen Befestigungseinrichtung 6 und stellt für die Stütze 1 einen Bewegungsfreiheitsgrad in Längsrichtung der Stütze 1 zur Verfügung. Die Einrichtung 5 umfasst eine Führungsbuchse, in der die Stütze 1 längsverschieblich gelagert ist. Die Einrichtung 5 kann vorzugsweise ein geräuschhemmendes Kunststoffelement umfassen, vorzugsweise angeordnet zwischen der Führungsbuchse und der Stütze 1 und z. B. ausgeführt als Kunststoffummantelung für die Stütze 1.

Figur 3 kann außerdem entnommen werden, dass aus optischen Gründen die Einrichtung 5 mit einer Verkleidung versehen werden kann.

Figur 4 zeigt eine perspektivische Ansicht eines Innenraums 13 einer LKW-Doppelkabine mit einer vordersten Sitzreihe mit drei Sitzen und mit einer Stütze 1 gemäß einer Ausführungsform der Erfindung.

Figur 4 zeigt insbesondere, dass der in der vordersten Sitzreihe positionierte Kraftahrzeug-Sitz 4 über einen Sitzsockel 8 auf einer Bodenerhöhung 9 anordbar ist, so dass sich die Sitzfläche des Kraftfahrzeug-Sitzes 4 auf einem höheren Niveau erstreckt als die Sitzfläche zweier seitlich benachbarter Kraftfahrzeug-Sitze, in Figur 4 des Fahrersitzes und des Beifahrersitzes.

Figur 4 zeigt den Sicherheitsgurt 3 als Zwei-Zungen-Variante mit zweckmäßig zwei Schlössern.

Die Erfindung ist nicht auf die oben beschriebenen bevorzugten Ausführungsformen beschränkt.

Darüber hinaus beansprucht die Erfindung auch Schutz für den Gegenstand der Unteransprüche.

### Bezugszeichenliste

- 1: Stütze
- 2: Sicherheitsgurt-Montagevorrichtung zur Montage eines Sicherheitsgurts zum Sichern einer auf einem Kraftfahrzeug-Sitz sitzenden Person, insbesondere eines Kraftfahrzeug-Passagiers
- 3: Sicherheitsgurt
- 4: Kraftfahrzeug-Sitz
- 5: Einrichtung zur Kompensation von im Fahrzustand des Kraftfahrzeugs entstehenden Verformungen
- 6: Obere Befestigungseinrichtung zur Montage der Stütze an ein oberes Kraftfahrzeug-Bauteil
- 7: Untere Befestigungseinrichtung zur Montage der Stütze an ein unteres Kraftfahrzeug-Bauteil
- 8: Sitzsockel
- 9: Bodenerhöhung, insbesondere podestförmige Bodenerhöhung
- 10: Bodenstruktur
- 11: Dachstruktur
- 12: Zweckmäßig zwei gegenüberliegende Seitenstrukturen
- 13: Innenraum

## Patentansprüche

1. Kraftfahrzeug, mit einem durch eine Bodenstruktur (10), eine Dachstruktur (11) und zwei Seitenstrukturen (12) begrenzten Innenraum (13), wobei im Innenraum (13) eine Stütze (1), vorzugsweise eine freistehende Stütze (1), angeordnet ist, wobei die Stütze (1) zumindest eine Sicherheitsgurt-Montagevorrichtung (2) zur Montage eines Sicherheitsgurts (3) zum Sichern einer auf einem Kraftfahrzeug-Sitz (4) sitzenden Person aufweist und vorzugsweise zur zumindest Reduzierung einer Dachdeformation im Crashfall des Kraftfahrzeugs ausgelegt ist, um einen Überlebensraum im Immenraum (13) zu gewährleisten, wobei die Stütze (1) mit zumindest einer Einrichtung (5) zur Kompensation von im Fahrzustand des Kraftfahrzeugs entstehenden Verformungen versehen ist, **dadurch gekennzeichnet, dass** die Einrichtung (5) einen Bewegungsfreiheitsgrad für die Stütze (1) in Längsrichtung der Stütze (1) zur Verfügung stellt und die Einrichtung (5) eine Führungsbuchse umfasst, in der die Stütze (1) längsverschieblich gelagert ist.

2. Kraftfahrzeug nach Anspruch 1, **dadurch gekennzeichnet, dass** die Stütze (1) nur eine obere Sicherheitsgurt-Montagevorrichtung (2) aufweist oder die Stütze (1) eine obere Sicherheitsgurt-Montagevorrichtung (2) und eine untere Sicherheitsgurt-Montagevorrichtung aufweist.

3. Kraftfahrzeug nach einem der vorhergehenden Ansprüche, **dadurch gekennzeichnet, dass** das Kraftfahrzeug den Sicherheitsgurt (3) aufweist und der Sicherheitsgurt (3) Teil eines 3-Punkt-Haltegurt-Systems ist.

4. Kraftfahrzeug nach einem der vorhergehenden Ansprüche, **dadurch gekennzeichnet, dass** die Stütze (1) über eine obere Befestigungseinrichtung (6) an einem oberen Kraftfahrzeug-Bauteil montiert ist und/oder über eine untere Befestigungseinrichtung (7) an einem unteren Kraftfahrzeug-Bauteil montiert ist.

5. Kraftfahrzeug nach einem der vorhergehenden Ansprüche, **dadurch gekennzeichnet, dass** die Einrichtung (5) Teil der oberen Befestigungseinrichtung (6) und/oder Teil der unteren Befestigungseinrichtung (7) ist.

6. Kraftfahrzeug nach einem der vorhergehenden Ansprüche, **dadurch gekennzeichnet, dass** die Einrichtung (5) ein geräuschhemmendes Element umfasst, vorzugsweise angeordnet zwischen Führungsbuchse und Stütze (1), ausgeführt als Ummantelung für die Stütze (1) und/oder hergestellt aus Kunststoff.

7. Kraftfahrzeug nach einem der Ansprüche 4 bis 6, **dadurch gekennzeichnet, dass** das obere Kraftfahrzeug-Bauteil die Dachstruktur (11) umfasst und die obere Befestigungseinrichtung (6) an die Dachstruktur (11) montiert ist.

8. Kraftfahrzeug nach einem der Ansprüche 4 bis 7, **dadurch gekennzeichnet, dass** das untere Kraftfahrzeug-Bauteil einen Sitzsockel (8) und/oder die Bodenstruktur (10) umfasst und die untere Befestigungseinrichtung (7) hieran montiert ist.

9. Kraftfahrzeug nach Anspruch 8, **dadurch gekennzeichnet, dass** der Sitzsockel (8) auf die Bodenstruktur (10) aufsetzbar und/oder daran anmontierbar ist.

10. Kraftfahrzeug nach einem der vorhergehenden Ansprüche, **dadurch gekennzeichnet, dass** der Kraftfahrzeug-Sitz (4) ein mittlerer und/oder freistehender Kraftfahrzeug-Sitz (4) ist und die Stütze (1) seitlich neben und/oder hinter der Sitzlehne des Kraftfahrzeug-Sitzes (4) angeordnet ist.

11. Kraftfahrzeug nach einem der vorhergehenden Ansprüche, **dadurch gekennzeichnet, dass** der Kraftfahrzeug-Sitz (4) auf einer Bodenerhöhung (9) angeordnet ist und/oder sich die Sitzfläche des Kraftfahrzeug-Sitzes (4) auf einem höheren Niveau erstreckt als die Sitzfläche zumindest eines seitlich benachbarten Kraftfahrzeug-Sitzes, eines Fahrersitzes und/oder eines Beifahrersitzes des Kraftfahrzeugs.

12. Kraftfahrzeug nach einem der vorhergehenden Ansprüche, **dadurch gekennzeichnet, dass** der Innenraum (13) Teil eines Kraftfahrzeugs mit einer vordersten Sitzreihe mit zumindest drei Sitzplätzen ist und/oder der Kraftfahrzeug-Sitz (4) in der vordersten Sitzreihe des Kraftfahrzeugs positioniert ist.

## Claims

1. Motor vehicle, with an interior (13) which is bounded by a floor structure (10), a roof structure (11) and two side structures (12), wherein a support (1), preferably a freestanding support (1), is arranged in the interior (13), wherein the support (1) has at least one seat belt mounting device (2) for mounting a seat belt (3) for securing a person sitting on a motor vehicle seat (4) and is preferably designed for at least reducing roof deformation in the event of a crash of the motor vehicle in order to ensure a survival space in the interior (13), wherein the support (1) is provided with at least one device (5) for compensating for deformations arising in the driving state of the motor vehicle, **characterized in that** the device (5) provides a degree of freedom of movement for the support (1) in the longitudinal direction of the support (1), and the device (5) comprises a guide bushing in which the support (1) is mounted in a longitudinally displaceable manner.

2. Motor vehicle according to Claim 1, **characterized in that** the support (1) has only an upper seat belt mounting device (2), or the support (1) has an upper seat belt mounting device (2) and a lower seat belt mounting device.

3. Motor vehicle according to either of the preceding claims, **characterized in that** the motor vehicle has the seat belt (3) and the seat belt (3) is part of a 3-point retaining belt system.

4. Motor vehicle according to one of the preceding claims, **characterized in that** the support (1) is mounted on an upper motor vehicle component via an upper fastening device (6) and/or is mounted on a lower motor vehicle component via a lower fastening device (7).

5. Motor vehicle according to one of the preceding claims, **characterized in that** the device (5) is part of the upper fastening device (6) and/or part of the lower fastening device (7).

6. Motor vehicle according to one of the preceding claims, **characterized in that** the device (5) comprises a noise-inhibiting element, preferably arranged between guide bushing and support (1), designed as a covering for the support (1) and/or produced from plastic.

7. Motor vehicle according to one of Claims 4 to 6, **characterized in that** the upper motor vehicle component comprises the roof structure (11) and the upper fastening device (6) is mounted on the roof structure (11).

8. Motor vehicle according to one of Claims 4 to 7, **characterized in that** the lower motor vehicle component comprises a seat base (8) and/or the floor structure (10) and the lower fastening device (7) is mounted thereon.

9. Motor vehicle according to Claim 8, **characterized in that** the seat base (8) can be placed onto the floor structure (10) and/or can be mounted thereon.

10. Motor vehicle according to one of the preceding claims, **characterized in that** the motor vehicle seat (4) is a central and/or freestanding motor vehicle seat (4), and the support (1) is arranged laterally next to and/or behind the seat back of the motor vehicle seat (4).

11. Motor vehicle according to one of the preceding claims, **characterized in that** the motor vehicle seat (4) is arranged on a floor elevation (9) and/or the seat surface of the motor vehicle seat (4) extends on a higher level than the seat surface of at least one laterally adjacent motor vehicle seat, a driver's seat and/or a front passenger's seat of the motor vehicle.

12. Motor vehicle according to one of the preceding claims, **characterized in that** the interior (13) is part of a motor vehicle with a frontmost seat row having at least three seating places, and/or the motor vehicle seat (4) is positioned in the frontmost seat row of the motor vehicle.

## Revendications

1. Véhicule automobile, comprenant un habitacle (13) délimité par une structure de plancher (10), une structure de toit (11) et deux structures latérales (12), un montant (1), de préférence un montant (1) isolé étant disposé dans l'habitacle (13), le montant (1) possédant au moins un arrangement de montage de ceinture de sécurité (2) destiné au montage d'une ceinture de sécurité (3) servant à protéger une personne assise sur un siège de véhicule automobile (4) et étant de préférence conçu pour au moins réduire une déformation du toit dans le cas d'une collision du véhicule automobile afin de garantir un espace de survie dans l'habitacle (13), le montant (1) étant pourvu d'au moins un dispositif (5) servant à la compensation des déformations qui se produisent à l'état de déplacement du véhicule automobile, **caractérisé en ce que** le dispositif (5) fournit un degré de liberté de mouvement pour le montant (1) dans la direction longitudinale du montant (1) et le dispositif (5) comporte une douille de guidage dans laquelle le montant (1) est logé en coulissement longitudinal.

2. Véhicule automobile selon la revendication 1, **caractérisé en ce que** le montant (1) ne possède qu'un arrangement de montage de ceinture de sécurité (2) supérieur, ou le montant (1) possède un arrangement de montage de ceinture de sécurité (2) supérieur et un arrangement de montage de ceinture de sécurité inférieur.

3. Véhicule automobile selon l'une des revendications précédentes, **caractérisé en ce que** le véhicule automobile possède la ceinture de sécurité (3) et la ceinture de sécurité (3) fait partie d'un système de ceinture de maintien à 3 points.

4. Véhicule automobile selon l'une des revendications précédentes, **caractérisé en ce que** le montant (1) est monté par le biais d'un dispositif de fixation supérieur (6) à un élément structural de véhicule automobile supérieur et/ou par le biais d'un dispositif de fixation inférieur (7) à un élément structural de véhicule automobile inférieur.

5. Véhicule automobile selon l'une des revendications précédentes, **caractérisé en ce que** le dispositif (5) fait partie du dispositif de fixation supérieur (6) et/ou fait partie du dispositif de fixation inférieur (7).

6. Véhicule automobile selon l'une des revendications précédentes, **caractérisé en ce que** le dispositif (5) comporte un élément inhibiteur de bruit, de préférence disposé entre la douille de guidage et le montant (1), réalisé sous la forme d'une gaine pour le montant (1) et/ou fabriqué en matière plastique.

7. Véhicule automobile selon l'une des revendications 4 à 6, **caractérisé en ce que** l'élément structural de véhicule automobile supérieur comporte la structure de toit (11) et le dispositif de fixation supérieur (6) est monté à la structure de toit (11).

8. Véhicule automobile selon l'une des revendications 4 à 7, **caractérisé en ce que** l'élément structural de véhicule automobile inférieur comporte un socle d'assise (8) et/ou la structure de plancher (10) et le dispositif de fixation inférieur (7) est monté sur celui-ci/celle-ci.

9. Véhicule automobile selon la revendication 8, **caractérisé en ce que** le socle d'assise (8) peut être posé sur la structure de plancher (10) et/ou peut être monté contre celle-ci.

10. Véhicule automobile selon l'une des revendications précédentes, **caractérisé en ce que** le siège de véhicule automobile (4) est un siège de véhicule automobile (4) central et/ou isolé et le montant (1) est disposé latéralement à côté et/ou derrière le dossier de siège du siège de véhicule automobile (4).

11. Véhicule automobile selon l'une des revendications précédentes, **caractérisé en ce que** le siège de véhicule automobile (4) est disposé sur une élévation du plancher (9) et/ou la surface d'assise du siège de véhicule automobile (4) s'étend à un niveau plus élevé que la surface d'assise d'au moins un siège de véhicule automobile latéralement voisin, d'un siège de conducteur et/ou d'un siège de passager du véhicule automobile.

12. Véhicule automobile selon l'une des revendications précédentes, **caractérisé en ce que** l'habitacle (13) fait partie d'un véhicule automobile comprenant une rangée de sièges la plus en avant avec au moins trois places assises et/ou le siège de véhicule automobile (4) est positionné dans la rangée de sièges la plus en avant du véhicule automobile.
